# EUROPÄISCHE PATENTSCHRIFT

(11) **EP 0 791 772 B1**
(45) Veröffentlichungstag und Bekanntmachung des Hinweises auf die Patenterteilung: **25.09.2002**
(21) Anmeldenummer: 96112110.0
(22) Anmeldetag: 26.07.1996
(51) Int. Cl.: F16K 11/00, F16K 11/10, F24D 19/10

(54) **Dreiwegeventil für hydraulische Schnittstelle**
Three-way valve for hydraulic interface
Soupape à trois voies pour jonction hydraulique

(30) Priorität: 22.02.1996 DE 19606431
(43) Veröffentlichungstag der Anmeldung: 27.08.1997
(73) Patentinhaber: WILO GmbH, D-44263 Dortmund (DE)
(72) Erfinder: Strelow, Günter, 44801 Bochum (DE); Materne, Thomas, 59348 Lüdinghausen (DE)
(74) Vertreter: COHAUSZ DAWIDOWICZ HANNIG & PARTNER

(56) Entgegenhaltungen:
- EP-A- 0 374 727
- EP-A- 0 447 851
- EP-A- 0 568 122
- GB-A- 1 122 392

## Beschreibung

Die Erfindung betrifft ein Mehrwegeventil nach dem Oberbegriff des Anspruch 1.
Bei modernen Heizungsanlagen ist es bekannt, mit einem Heizkessel sowohl den Heizkreislauf und alternativ den Wärmetauscher für einen Sanitärkreislauf mit heißem Wasser zu versorgen. Um zwischen den beiden Kreisläufen umschalten zu können werden mitunter zwei getrennte Pumpen eingesetzt, die auch in einer Doppelpumpe vereint sein können. Der Einsatz zweier getrennter Pumpen oder einer Doppelpumpe ist insofern nachteilig, als sich der vergleichsweise hohe Kostenaufwand für bestimmte einfache Anwendungen nicht lohnt.
Alternativ ist es möglich, eine einzige Pumpe mit zwei getrennten Auslassen vorzusehen, die durch Umkehrung ihrer Drehrichtung ein Absperrventil betätigt, das jeweils einen der Auslasse schließt. Derartige Pumpen haben einen vergleichsweise schlechten Wirkungsgrad, so daß ihr Betrieb auf Dauer ebenfalls sehr kostenintensiv ist und zur Verschwendung von Energie beiträgt.
Als besonders kostengünstige Lösung bietet es sich an, in den Vor- oder Rücklauf des Heizkessels ein Dreiwegeventil einzusetzen, das zwischen den Kreisläufen die von einer Standardpumpe versorgt werden, hin- und herschaltet. Der Einsatz eines solchen separaten Mehr- insbesondere Dreiwegeventils bedeutet wie auch der Einsatz zweier Pumpen wegen der großen Anzahl nötiger Bauteile wie Rohrleitungen, Verschraubungen und Dichtungen einen hohen Aufwand bei der Installation und stellt daher eine kostenintensive Lösung dar. Alle genannten Lösungen gehen darüber hinaus mit einem großen Raumbedarf einher. Zudem ist die Montage und der Austausch der einzelnen Komponenten mühsam, da sie oft schwer erreichbar sind. Ein gattungsgemäßes Ventil ist generell aus der EP 568 122 A1 bekannt. Dort gezeigt ist ein Gehäuse, dessen Anschlußstutzen in einer Ebene liegen, das jedoch generell nicht geeignet ist, ein modulares und damit komfortables System zu unterstützen.
Aufgabe der Erfindung ist es, ein System zur alternativen Ansteuerung mehrerer Wasserkreisläufe zu schaffen, das einen modularen Aufbau unterstützt und das kostengünstig und einfach handhabbar ist.
Die Aufgabe wird erfindungsgemäß durch ein Mehrwegeventil mit den kennzeichnenden Merkmalen des Anspruch 1 gelöst.
Vorteilhafte Ausführungsformen des erfindungsgemäßen Mehrwegeventiles sind in den Unteransprüchen aufgeführt.
Wesentlicher Vorteil des erfindungsgemäßen Mehrwegeventiles ist, daß die parallele Anordnung und der geringe Abstand der zwei Grundflächen des Gehäuses eine kompakte flache Bauweise ermöglicht, die zu einer erheblich günstigeren Raumaufteilung beiträgt. Die Öffnungen, welche Einlässe oder Auslasse bilden, sind in die Grundflächen, die als hydraulische Schnittstellen ausgebildet sind, eingebracht. Die Ein- oder Auslasse sind mit ihrer Mittelsenkrechten achsparallel zur senkrechten Mittelachse der Grundflächen angeordnet. Auf diese Weise wird das modulare Zusammenfügen einzelner Komponenten ermöglicht. Das erfindungsgemäße Dreiwegeventil trägt außerdem dazu bei, daß die Pumpe ohne Minderung ihres Wirkungsgrades eingesetzt werden kann.
Ein weiterer Vorteil des Dreiwegeventiles ist, daß es einerseits als separates Bauteil benutzt und andererseits in modularem Aufbau mit einem Heizkessel und/oder einer Pumpe eingesetzt werden kann, wobei Heizkessel und Pumpe jeweils eine entsprechende Schnittstelle aufweisen. Die modulare Kombination bietet eine besonders kostengünstige Lösung. Dabei ist je nach Ausgestaltung des Dreiwege-ventiles der Einbau in den Vorlauf oder den Rücklauf des Kessels möglich. Je nach dem weist das Dreiwegeventil einen Auslaß und zwei Einlässe oder einen Einlaß und zwei Auslasse auf.
Es ist besonders vorteilhaft, das Dreiwegeventil außerdem mit einem Durchlaß zu versehen, der die Verbindung zum Druck- oder Saugstutzen einer auf die andere Grundfläche des Dreiwegeventiles aufgesetzten Pumpe herstellt. Die Pumpe, die vorteilhafterweise eine Kreiselpumpe ist, läßt sich damit auf einfachste Weise in das modulare System integrieren. Beim Einbau des Dreiwegeventiles in den Rücklauf des Heizkessels ist eine dezentrale Anordnung des Durchlasses vorteilhaft. Die Auslasse sind in dieser Ausführungsform in gleichem radialen Abstand zur Mittelachse wie der Durchlaß angeordnet, während der Einlaß auf der gegenüberliegenden Grundfläche zentral angeordnet ist.
Der Wechsel zwischen verschiedenen Ausführungsformen des Ventiles kann in einer vorteilhaften Ausführungsform durch den Austausch eines Einsatzes in das Gehäuse geschehen. Die Position der Öffnungen kann damit an den individuellen Kundenwunsch angepaßt werden.
Die Dichtung einer zu verschließenden Öffnung wird mittels eines von Innen gegen die Öffnungen verschiebbaren Dichtkörpers gewährleistet. Dabei ist in der Ausgestaltung als Dreiwegeventil jeweils ein Dichtkörper vor jeder der alternativ zu verschließenden Öffnungen angebracht. Die Dichtkörper sind in einer Ausführungsform vorteilhafterweise als Klappen ausgebildet, die gegen einen Ventilsitz gedrückt werden. Bei den Klappen kann es sich um Zug- oder Schwenkklappen handeln. Die Klappen sind in einer anderen Ausbildungsform so ausgebildet, daß sie sich durch axiales Verschieben öffnen. Die beiden Klappen sind über ein gemeinsames Getriebe verbunden, das im einfachsten Falle einem Hebel gleicht, an dessen beiden Enden je eine Klappe angebracht ist. Die Bewegung des Hebels geschieht vorteilhafterweise über ein Stellglied, das von Außen durch eine senkrecht zu den Grundflächen orientierte Seitenwand zugänglich ist.
Die Bewegung des Stellgliedes erfolgt mittels eines Motors oder eines elektrisch bzw. hydraulisch gesteuerten Magnet- oder Membranschalters. In einer anderen Ausführungsform wird das Schließen der Klappen durch eine kurzzeitige Änderung der Drehrichtung der Pumpe bewirkt. Selbst ein manuelles Betätigen des Stellgliedes kann ermöglicht werden.
Durch den modularen Aufbau ist die Möglichkeit eines schnellen Austausches defekter Komponenten gegeben, was zu einer Kostenersparnis im Falle einer Wartung beiträgt. So kann beispielsweise bei einem Defekt des Dreiwegeventiles, die Pumpe zur Notversorgung direkt auf den Heizkessel aufgesetzt werden. Beim Einsatz des Dreiwegeventiles als separate Einheit kann eine Grundfläche vorteilhafterweise mit einer Abdeckplatte (Blindflansch) verschlossen werden. Der modulare Aufbau gestattet es sogar, die Montage der Komponenten, die im einfachsten Falle zusammengeschraubt werden, automatisch vorzunehmen.

Da das Dreiwegeventil aktiv gesteuert wird und nicht mit Differenzdrücken arbeitet, können auch Pumpen mit niedriger Leistung oder elektronisch regelbare Pumpen eingesetzt werden, ohne daß es zu Leckagen zwischen den einzelnen Kreisläufen kommt.

Eine besonders vorteilhafte Ausführungsform des Ventiles weist eine Einrichtung zum Entlüften des Pumpmediums auf. Diese Entlüftungseinrichtung ist in das Ventil ein- oder an das Ventil angebaut. Es ist weiterhin vorteilhaft, in oder an dem Ventiles eine Einrichtung zum Filtern des Pumpmediums vorzusehen.

Ausführungsbeispiele des Mehrwegeventiles sind in den Zeichnungen dargestellt und werden im folgenden näher beschrieben.

Es zeigen:
- **Fig. 1**: ein Schaltschema eines Heizkessels, mit zwei Kreisläufen,
- **Fig. 2**: den Anschluß eines Dreiwegeventiles,
- **Fig. 3**: einen vertikalen Schnitt eines Dreiwegeventiles,
- **Fig. 4**: einen vertikalen Schnitt eines Dreiwegeventiles,
- **Fig. 5**: einen horizontalen Schnitt durch ein Dreiwegeventil
- **Fig. 6**: einen horizontalen Schnitt durch ein Dreiwegeventil
- **Fig. 7**: einen vertikalen Schnitt durch ein Dreiwegeventil mit axial beweglichen Klappen.
- **Fig. 8**: einen vertikalen Schnitt durch ein Dreiwegeventil mit schwenkbaren Klappen.
- **Fig. 9**: einen vertikalen Schnitt durch ein Dreiwegeventil mit eingebautem handelsüblichen Ventil.

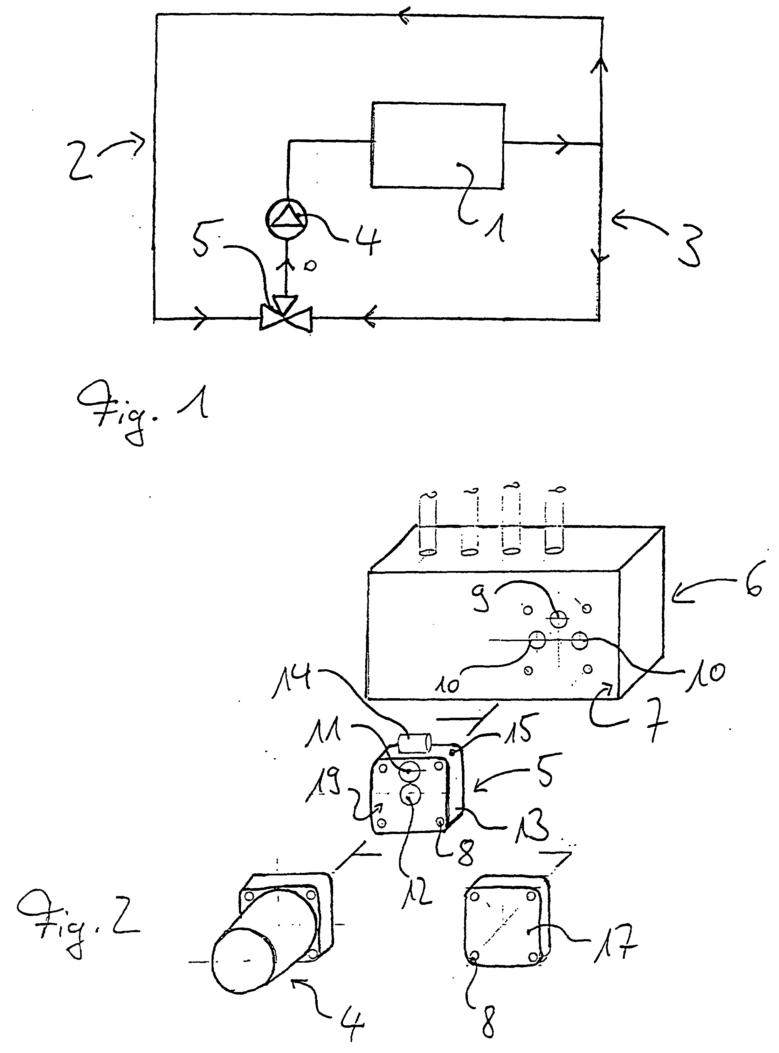

Figur 1 zeigt den Anschlußplan eines Heizkessels 1 an einen Heizkreislauf 2 und einen Sanitärkreislauf 3. Beide Kreisläufe werden mit der Pumpe 4 bepumpt, die im Rücklauf des Heizkessels 1 angeordnet ist. Die Umschaltung zwischen beiden Kreisläufen 2 und 3 erfolgt mittels des Dreiwegeventiles 5.

In Figur 2 ist der modulare Aufbau einer Einheit aus dem nicht dargestellten Heizkessel, dem Dreiwegeventil 5 und der Pumpe 4 dargestellt. Der Heizkessel weist eine Anschlußeinheit 6 mit einer Anschlußplatte 7 auf. Mittels der durch die Bohrungen 8 gesteckten Schrauben wird das Dreiwegeventil 5 (im folgenden Ventil genannt) mit seinen Grundflächen 16 und 19 anliegend, zwischen der Pumpe 4 und der Anschlußplatte 7 befestigt. Die Anschlußplatte 7 weist eine Austritts- 9 und zwei Eintrittsöffnungen 10 auf. Die Austrittsleitung 9 setzt sich im zusammengebauten Zustand in einem in das Ventil 5 eingebrachten Durchlaß 11 fort, durch den das Wasser ungehindert in den Saugstutzen der Pumpe 4 gelangt. Der Druckstutzen der Pumpe 4 mündet in einem Einlaß 12 des Ventiles. Der über diesen Einlaß 12 zugängliche Raum im Inneren des Ventilgehäuses 13 weist zwei nicht dargestellte Auslasse auf, die alternativ geschlossen werden. Die Steuerung des Ventils wird mit einem Motor 14, der auf der Seitenfläche 15 des Ventils 5 angebracht ist, bewerkstelligt.
Statt der Pumpe 4 kann ein Blindflansch 17 auf die als Rückfläche ausgebildete Grundfläche 19 des Ventils aufgesetzt werden, der den Durchlaß 11 und den Einlaß 12 kurzschließt. Mit dem aufgesetzten Blindflansch 17 funktioniert das Ventil als separates Bauteil.

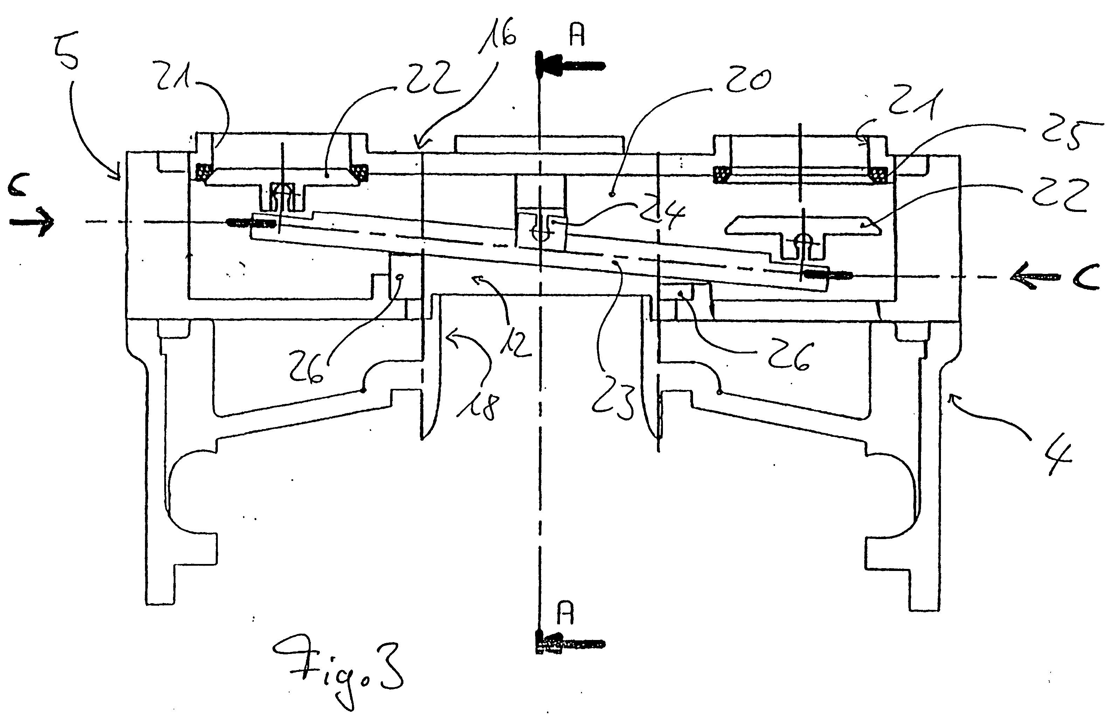

In Figur 3 ist ein Schnitt durch ein Ventil 5 gezeigt, das auf die hydraulische Schnittstelle einer Pumpe 5 aufgesetzt ist. Die hydraulische Schnittstelle hat einen zentral angeordneten Druckstutzen 18, aus dem der Wasserstrom aus der Pumpe aus- und über den Einlaß 12 in die Kammer 20 des Ventils 5 eintritt. Die Kammer 20 weist zwei Auslasse 21 an der als Vorderfläche ausgebildeten Grundfläche 16 auf, die mit Klappen 22 verschließbar sind. Die Klappen 22 sind an den Enden eines Hebels in Form eines Balkens 23 schwenkbar gelagert. Wie der Balken einer Waage ist der Balken 23 in seiner Mitte ebenfalls schwenkbar an einem Gelenk 24 aufgehängt. Je nach Stellung des Balkens 23 wird jeweils eine Klappe 22 gegen eine Dichtung 25, die den inneren Rand des Auslasses 21 umgibt, gedrückt. In einer nicht dargestellten Ausführungsform ist die Dichtung derart ausgebildet, daß sie den Rand des Auslasses 21 von Innen und Außen bedeckt.
Die Verstellung des Balkens 23 erfolgt über ein Stellglied, das eine Gabel mit zwei Armen 26 aufweist. Die Arme 26 sind im Gehäuse zwischen der zur Pumpe 4 gerichteten Grundfläche 19 und den Hebeln des Balkens 23 zu beiden Seiten des Einlasses 12 verschieblich angeordnet. Entlang des Verschiebeweges variieren die Arme 26 in ihrer Stärke. Die Stärke ist so bemessen, daß je nach Position des Stellgliedes ein Arm 26 die Bewegung des Balkens 23 wie ein Keilgetriebe bewirkt, wobei beide Arme gegenläufige Keilgetriebe aufweisen. Der jeweilige Balken wird etwa mittig zwischen dem Gelenk 24 und dem jeweiligen Ende unter den Balken 23 geschoben, so daß die Klappe 22 gegen die Dichtung 25 gedrückt wird.

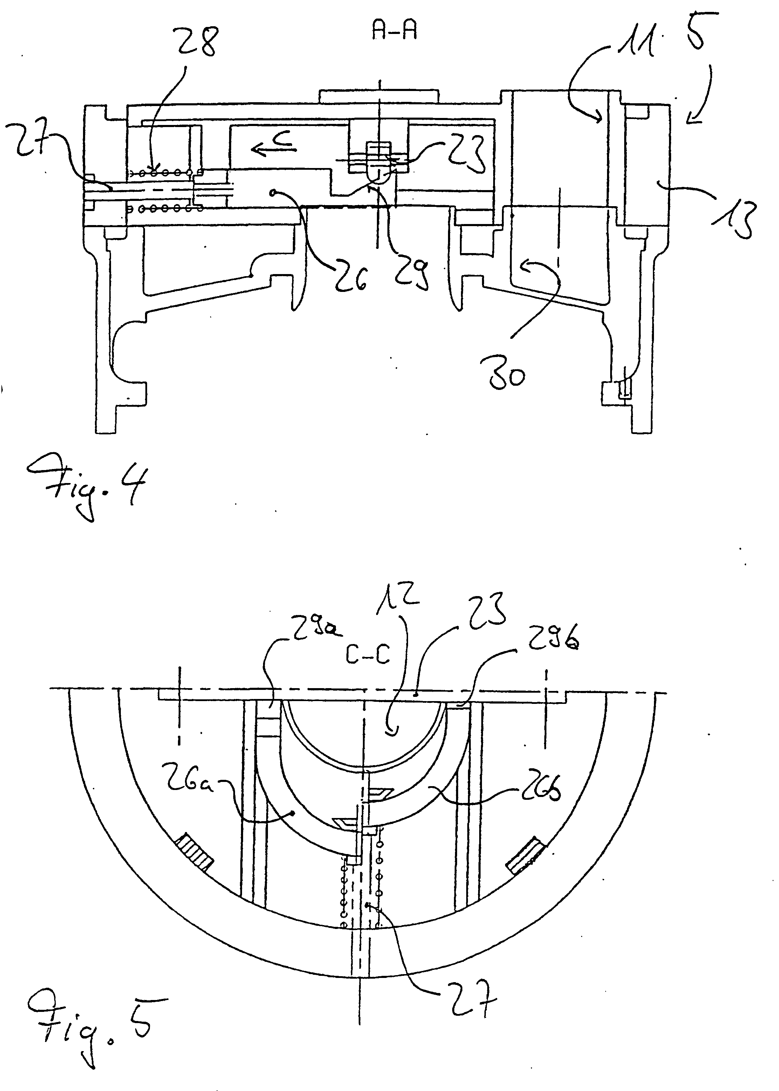

Figur 4 zeigt den in Figur 3 angedeuteten Schnitt A-A durch das Ventil 5. Zu erkennen ist das Verstellglied 27 an dessen Ende die Arme 26 angebracht sind. Das Verstellglied 27 ist mit einer Feder 28 vorgespannt. Der gezeigte Arm 26 weist einen Antriebsteil 29 auf, der bei Verschiebung in Richtung C den als Abtriebsteil ausgebildetet Balken 23 beaufschlagt. Figur 4 zeigt ebenfalls den Durchlaß 11, der eine ungehinderte Durchführung des Wassers durch das Gehäuse 13 zum Saugstutzen 30 der Pumpe gewährleistet.

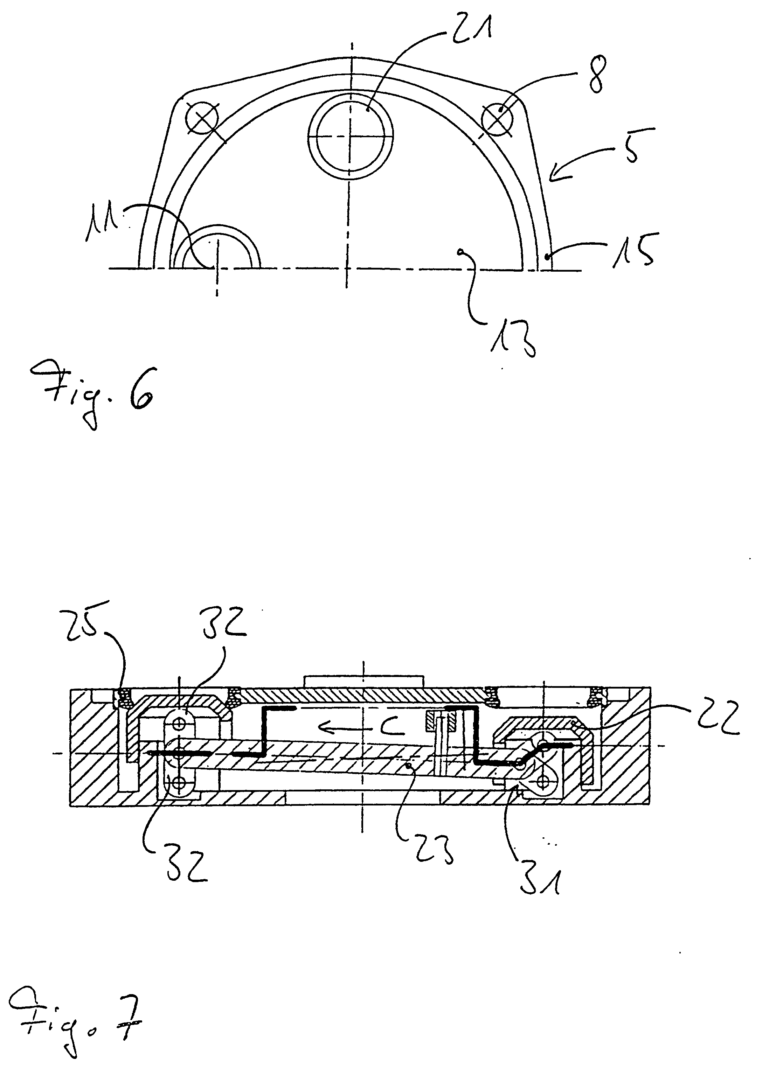

Figur 5 zeigt den in Figur 3 angedeuteten Schnitt C-C. Das Verstellglied 27 ist dabei in der linken Hälfte der Figur in seiner ausgerückten Position und in der rechten Hälfte in seiner eingerückten Position gezeigt. In der ausgerückten Position unterstützt der Arm 26a mit seinem Antriebsteil 29a den Balken 23. In der eingerückten Position unterstützt der Arm 26b mit seinem Antriebsteil 29b den Balken 23. Zu erkennen ist zudem, wie die Arme 26 und 26a um den Einlaß 12 herum angeordnet sind.

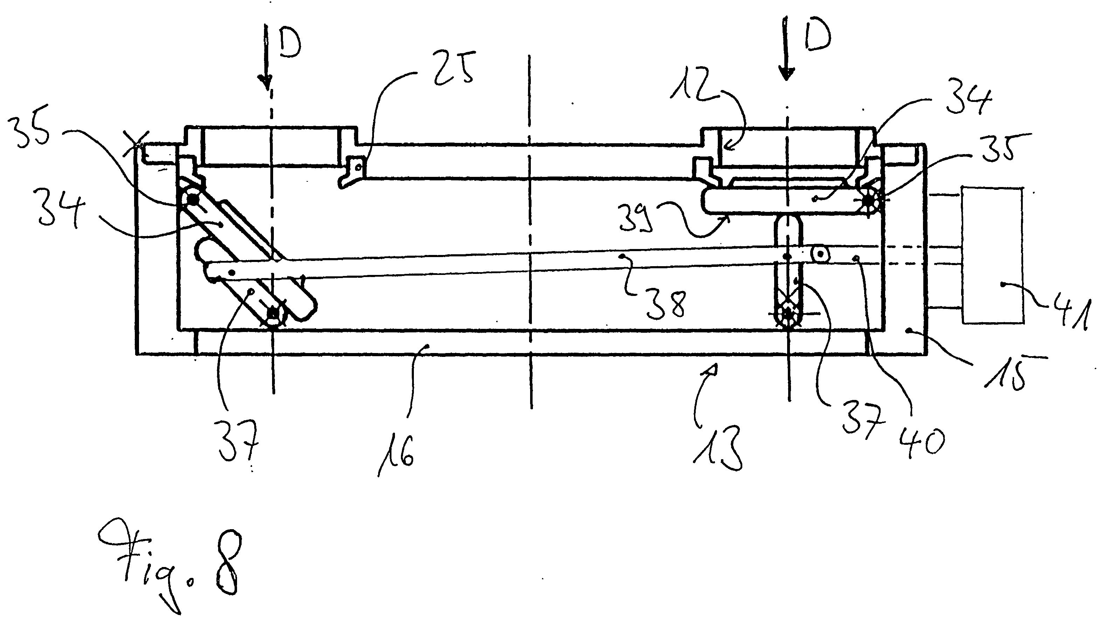

In Figur 6 ist eine Teildraufsicht auf ein Ventil 5 gezeigt. Das Gehäuse 13 ist an seinen Seitenwänden 15 derart ausgebildet, daß in den Gehäuserand Bohrungen 8 eingebracht sind, durch die Befestigungsschrauben geführt werden. Außerdem ist einer der Auslasse 21 und der Durchlaß 11 zu erkennen.
Das in Figur 7 gezeigte Ausführungsbeispiel weist ein alternatives Getriebe zur Steuerung der Klappen 22 auf. Dabei beaufschlagen die Enden des Balkens 23 Kniehebel 31, die zwei in einem gemeinsamen Gelenk gelagerte Hebel 33 haben. Der durch Verschieben des Balkens 23 in Richtung C auf die Kniehebel 31 ausgeübte Druck erzeugt eine etwa senkrecht dazu gerichtete Kraft, mit welcher die Klappen 22 gegen die Dichtung 25 am Auslaß 21 gedrückt werden.

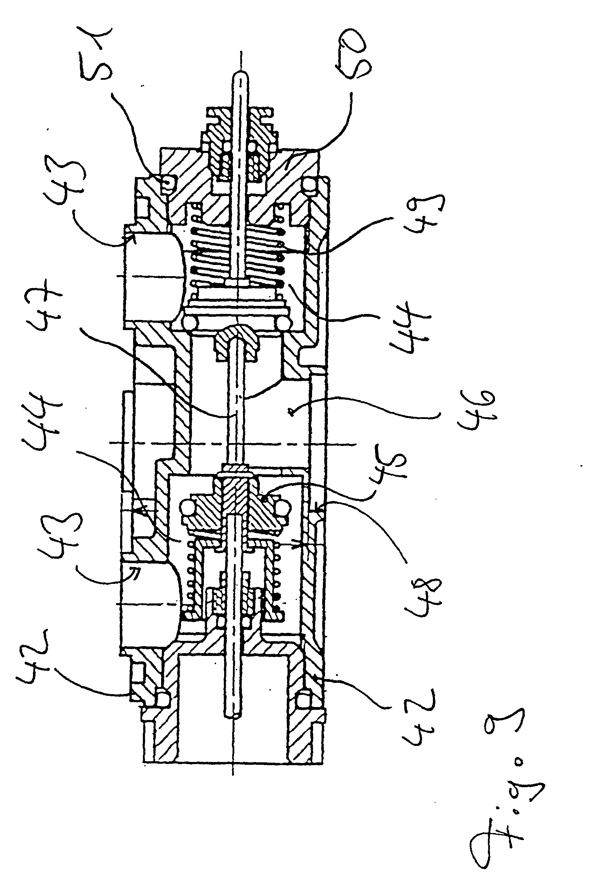

In Figur 8 ist eine Ausführungsform des Ventiles dargestellt, bei der Klappen 34 schwenkbar an einem Gelenk 35 gehaltert sind. Die Gelenke 35 sind auf der Innenseite der Seitenfläche 15 des Gehäuses 13 angebracht, so daß die Klappen 34 gegen die Seitenfläche schwenken. Die Klappen 34 öffnen bei Druck (Pfeilrichtung D) auf den Einlaß 12, wenn ein zwischen der jeweiligen Klappe 34 und der dem Einlaß 12 gegenüberliegenden Innenseite 36 der Grundfläche 16 angeordneter Riegel 37 aus seiner Verschlußstellung umklappt. In der Verschlußstellung steht der Riegel 37 senkrecht auf der Grundfläche 16 und drückt die Klappe 34 von Innen gegen die Dichtung 25. Der Riegel 37 wird mittels eines Schubgliedes 38 an dem beide Riegel 37 schwenkbar angebracht sind, gekippt, wobei das freie Ende des Riegels 37 auf der Innenseite 39 der Klappe 34 gleitet. Das Schubglied 38 wird über ein von außen zugängliches Stellglied 40 mit einem Schalter 41 bewegt. Die Riegel 37 sind derart am Schubglied 38 befestigt, daß der eine Riegel 37 in schließender, d.h. in senkrecht aufgestellter Lage, und der andere Riegel in öffnender, d.h. in gekippter Lage, ist.
Figur 9 zeigt einen Schnitt durch ein Dreiwegeventil mit eingebautem Ventilkörper eines handelsüblichen Ventils. Der Ventilkörper ist umgeben von zwei Gehäusedeckeln 42 von denen einer zwei Einlässen 43 und der andere einen Auslaß 48 aufweist. Die Gehäusedeckel 42 sind gegenüber dem Gehäuse 50 des Ventilkörpers über Dichtringe 51 gedichtet. Der Aus- und die Einlässe entsprechen in Anordnung und Größe denen der Kreiselpumpe, vor der das Dreiwegeventil angeordnet wird.
Die Einlässe 43 führen in jeweils eine Ventilkammer 44, in der je ein Dichtkörper 45 verschieblich eingebracht ist. Die beiden Dichtkörper 45 sind auf einer gemeinsamen Achse 47 angeordnet, wobei die Achse 47 senkrecht zur Pumpenachse bzw. zu den Einlässen 43 geführt ist. Die Achse 47 und damit die darauf angeordneten Dichtkörper 45 sind über einen nicht dargestellten Antrieb zwischen zwei Positionen verschieblich. In jeder der beiden Positionen wird wechselweise eine der beiden Ventilkammern 44 gegen einen zum Auslaß 48 führenden Zwischenraum 46 verschlossen. In beliebig einstellbaren Zwischenpositionen kann die Menge des durch einen der Einlässe 43 strömenden Pumpmediums kontinuierlich reguliert werden. Dabei drückt der Antrieb beim Verschieben der Dichtkörper 45 gegen eine Rückstellfeder 49, die in einer der beiden Ventilkammern 44 angeordnet ist.

## Patentansprüche

1. Mehrwegeventil, insbesondere Dreiwegeventil (5), mit einem Gehäuse (13), das zwei zueinander parallel angeordnete Grundflächen (16,19) aufweist, wobei die Grundflächen eine ebene Vorderfläche (16) und eine ebene Rückfläche (19) bilden und wobei in die Grundflächen (16,19) mindestens drei Öffnungen, die Einlaß- und Auslaßöffnungen (12,21) bilden, eingebracht sind,
**dadurch gekennzeichnet,**
- **daß** der Abstand zwischen den Grundflächen kleiner ist als die Höhe und die Breite des Gehäuses (13) und
- **daß** die Grundflächen (16,19) hydraulische Schnittstellen bilden, wobei auf die Vorderfläche (16) direkt eine Anschlußfläche (7) eines Heizkessels (1) aufsetzbar ist und wobei auf die Rückfläche (19) eine Kreiselpumpe oder ein Blindflansch aufsetzbar ist .

2. Mehrwegeventil nach Anspruch 1,
**dadurch gekennzeichnet, daß** eine Grundfläche einen Einlaß (12) und die andere Grundfläche zwei Auslasse (21) aufweist, die mit Dichtkörpern (22) alternativ verschließbar sind.

3. Mehrwegeventil nach Anspruch 1,
**dadurch gekennzeichnet, daß** eine Grundfläche einen Auslaß (21) und die andere Grundfläche zwei Einlässe (12) aufweist, die mit Dichtkörpern (22) alternativ verschließbar sind.

4. Mehrwegeventil nach einem der vorherigen Ansprüche,
**dadurch gekennzeichnet, daß** mindestens zwei Dichtkörper (22) über ein Getriebe verbunden sind, das mittels eines Stellgliedes (27) betätigbar ist.

5. Mehrwegeventil nach Anspruch 4,
**dadurch gekennzeichnet, daß** das Stellglied durch eine Seitenwand (15) des Gehäuses zugänglich und mittels eines Motors, eines Magnet- oder Membranschalters (14) betätigbar ist.

6. Mehrwegeventil nach einem der vorherigen Ansprüche,
**dadurch gekennzeichnet, daß** das Gehäuse (13) einen Durchlaß (11) aufweist, der die beiden Grundflächen (16,19), miteinander verbindet.

7. Mehrwegeventil nach Anspruch 6,
**dadurch gekennzeichnet, daß** die Kreiselpumpe (4) derart auf die Rückfläche (19) aufsetzbar ist, daß der Durchlaß (11) mit dem Druckstutzen (30) und der Einlaß mit dem Saugstutzen (18) verbunden ist oder daß der Durchlaß (11) mit dem Saugstutzen (18) und der Einlaß mit dem Druckstutzen (30) verbunden ist.

8. Mehrwegeventil nach einem der vorherigen Ansprüche,
**dadurch gekennzeichnet, daß** die Dichtkörper (22) von Klappen (34) gebildet sind, die schwenkbar an einem Gelenk (35) gehaltert sind, wobei die Klappen (34) mit senkrecht auf der Grundfläche (16) stehenden Riegeln (37) gegen Druck (D) von Außen gegen die Dichtung (24) drückbar sind.

## Claims

1. A multi-way directional control valve, in particular a three-way directional control valve (5), with a housing (13) having two mounting faces (16,19) arranged parallel relative to each other, the mounting faces forming a flat front face (16) and a flat rear face (19), whereby at least three openings forming inlet and outlet openings (12,21) are incorporated in the mounting faces (16,19), **characterized in that**
- the distance between the mounting faces is smaller than the height and width of the housing (13) and
- that the mounting faces (16,19) form hydraulic interfaces, whereby on the front face (16) a connecting face (7) of a boiler (1) can be directly mounted and whereby on the rear face (19) a centrifugal pump or a blind flange can be mounted.

2. A multi-way directional control valve according to Claim 1, **characterized in that** one mounting face comprises an inlet (12)and the other mounting face two outlets (21) which can be alternately closed by means of sealing elements (22).

3. A multi-way directional control valve according to Claim 1, **characterized in that** one mounting face comprises an outlet (21) and the other mounting face two inlets (12) which can alternately be closed by means of sealing elements (22).

4. A multi-way directional control valve according to any of the preceding claims, **characterized in that** at least two sealing elements (22) are connected by means of a gear which is actuatable by means of an actuator (27).

5. A multi-way directional control valve according to Claim 4, **characterized in that** the actuator is accessible through a side wall (15)of the housing and can be actuated by a motor, a magnet switch or diaphragm switch (14).

6. A multi-way directional control valve according to any of the preceding claims, **characterized in that** the housing (13) comprises a through passage (11) connecting the two mounting faces (16,19) with each other.

7. A multi-way directional control valve according to Claim 6, **characterized in that** the centrifugal pump (4) is mountable in such a way on the rear face (19) that the through passage (11) is connected to the pressure nozzle (30) and the inlet with the suction nozzle (18) or that the through passage (11) is connected with the suction nozzle (18) and the inlet with the pressure nozzle (30).

8. A multi-way directional control valve according to any of the preceding claims, **characterized in that** the sealing elements (22) are formed by flaps (34) mounted swivelably on an articulated joint (35), whereby the flaps (34) can be urged against the seal (24) by means of bolts (37) standing perpendicular to the mounting face (16) against pressure (D) from the outside.

## Revendications

1. Une valve multivoies, en particulier une valve (5) à trois voies, dotée d'un corps (13), qui présente deux surfaces (16, 19) de base parallèles l'une par rapport à l'autre, cependant que les surfaces de base constituent un niveau surface (16) frontale et un niveau surface (19) dorsale et cependant que les surfaces (16, 19) de base présentent au moins trois ouvertures, lesquelles constituent des ouvertures (12, 21) d'admission et d'évacuation,
**caractérisée en ce que**
- la distance séparant les surfaces de base est inférieure à la hauteur et à la larguer du corps (13) et que
- les surfaces (16, 19) de base constituent des interfaces hydrauliques, cependant qu'une surface (7) de raccordement d'une citerne (1) de chauffage peut être montée directement sur la surface (16) frontale et cependant qu'une pompe centrifuge ou une plaque d'obturation peut être montée sur la surface (19) dorsale.

2. Une valve multivoies conforme à la revendication n° 1, **caractérisée en ce que** une surface de base présente une admission (12) et l'autre surface de base présente deux évacuations (21), qui peuvent être fermées en alternance à l'aide de corps (22) d'étanchéité.

3. Une valve multivoies conforme à la revendication n° 1, **caractérisée en ce que** une surface de base présente une évacuation (21) et l'autre surface de base présente deux admissions (12), qui peuvent être fermées en alternance à l'aide de corps (22) d'étanchéité.

4. Une valve multivoies conforme à une des revendications précédentes, **caractérisée en ce que** au moins deux corps (22) d'étanchéité sont reliés au travers d'une transmission, qui peut être actionnée à l'aide d'un élément (27) de commande.

5. Une valve multivoies conforme à la revendication n° 4, **caractérisée en ce que** l'élément de commande est accessible au travers d'une paroi (15) latérale et peut être actionné à l'aide d'un moteur, d'un commutateur à solénoïde ou d'un commutateur à membrane (14).

6. Une valve multivoies conforme à une des revendications précédentes, **caractérisée en ce que** le corps (13) présente un passage (11), qui relie les deux surfaces (16, 19) de base entre elles.

7. Une valve multivoies conforme à la revendication n° 6, **caractérisée en ce que** la pompe (4) centrifuge peut être disposée sur la surface (19) dorsale de telle façon, que le passage (11) est raccordé au raccord (30) de pression et l'admission est raccordée au raccord (18) d'aspiration ou que le passage (11) est raccordé au raccord (18) d'aspiration et l'admission est raccordée au raccord (30) de pression.

8. Une valve multivoies conforme à une des revendications précédentes, **caractérisée en ce que** les corps (22) d'étanchéité sont constitués de clapets (34), qui sont supportés de façon à pouvoir pivoter au niveau d'une rotule (35), cependant que les clapets (34) peuvent être appuyés contre l'étanchéité (24), contre l'effet de la pression (D) extérieure, à l'aide de verrous (37) dressés dans la direction verticale sur la surface (16) de base.
